# EUROPÄISCHE PATENTSCHRIFT

(11) **EP 1 547 663 B1**
(45) Veröffentlichungstag und Bekanntmachung des Hinweises auf die Patenterteilung: **13.01.2016**
(21) Anmeldenummer: 04027952.3
(22) Anmeldetag: 25.11.2004
(51) Int. Cl.: B01D 46/04, B01D 46/00

(54) **FILTERANORDUNG ENTHALTEND EIN FLEXIBLES FILTERMATERIAL**
FILTER SYSTEM COMPRISING A FLEXIBLE FILTER ELEMENT
DISPOSITIF DE FILTRE COMPRENANT UN ÉLÉMENT FILTRANT FLEXIBLE

(30) Priorität: 24.12.2003 DE 10361283; 14.02.2004 DE 102004007279
(43) Veröffentlichungstag der Anmeldung: 29.06.2005
(73) Patentinhaber: L. B. Bohle Maschinen + Verfahren GmbH, 59320 Ennigerloh (DE)
(72) Erfinder: Bohle, Lorenz, 59320 Ennigerloh (DE)
(74) Vertreter: Habbel, Hans-Georg

(56) Entgegenhaltungen:
- DE-A1- 1 906 526
- DE-A1- 10 232 034
- DE-A1- 10 245 734
- DE-A1- 19 501 715
- GB-A- 1 314 206
- US-A- 4 220 459
- US-A- 4 278 454
- US-A- 4 298 360
- US-A- 4 353 722
- US-A- 4 645 520

## Beschreibung

Die Erfindung bezieht sich auf eine flexible Filteranordnung gemäß dem Oberbegriff des Anspruches 1 z. B. für den Einsatz bei Wirbelbettgranulatoren.

Eine solche Filteranordnung ist in der US 42 47 313 A beschrieben. Hierbei besteht die eigentliche Filteranordnung aus Stützstreben, an deren Außenseite ein flexibles Filtermedium angeordnet ist. Durch Führen eines Gasstromes auf die Außenseite des Filtermediums lagern sich an der Außenseite des Filtermediums die im Gasstrom enthaltenen Feststoffpartkel ab, wobei gleichzeitig das eigentliche flexible Filtermedium entsprechend verformt wird. Um ein Reinigen des Filtermediums zu erreichen, ist es durch diese Literaturstelle bekannt, einen Spülstrom stoßartig in das Innere der eigentlichen Filteranordnung zu führen, wodurch das flexible Filtermedium nach außen gewölbt wird und die sich an der Außenseite des Filtermediums angesammelten Feststoffpartikel abgeschleudert werden.

Aus der DE 28 06 549 A1 ist eine selbsttätige Verschlußklappe für preßluftgereinigte Schlauchfilter bekanntgeworden, bei welcher in den Filterschlauch eine Injektordüse eingesetzt ist. In diese Injektordüse wird ein Preßluftstrahl gerichtet, und dieser Preßluftstrahl reißt Spülluft in den zu reinigenden Filterschlauch mit. Um Kurzschlüsse zu vermeiden, ist um das obere Teil der Injektordüse eine Kreisringscheibe angeordnet, die während des Spülvorganges den Ringraum zwischen Injektordüse und Filterschlauch abdichtet, aber während des normalen Filtervorganges durch den Luftdruck so angehoben wird, daß der Ringraum zwischen Injektordüse und Filterschlauch für den Luftaustritt freigegeben wird.

Eine Filteranordnung wird ebenso in US-A-4 645 520 offenbart.

Der Erfindung liegt die Aufgabe zugrunde, eine Filteranordnung dahingehend zu verbessern, daß ein besseres und wirksameres Reinigen des eigentlichen Filtermediums möglich wird.

Diese der Erfindung zugrundeliegende Aufgabe wird durch die Lehre des Anspruches 1 gelöst.

Vorteilhafte Ausgestaltungen sind in den Unteransprüchen erläutert.

Mit anderen Worten ausgedrückt wird gemäß der Erfindung vorgeschlagen, daß das eigentliche, die Reinigung des Filtermediums bewirkende Gas, das in an sich bekannter Weise impulsartig in das Innere der Filteranlage geführt wird, über ein Injektorrohr in das Innere der Filteranordnung geführt wird, wobei vorzugsweise dieses Injektorrohr höhenverstellbar ist. Gleichzeitig wird das Injektorrohr von einem Gasleitrohr umgeben, das Prozeßluft ansaugt und das vorzugsweise venturidüsenartig ausgebildet ist, so daß eine Beschleunigung des Prozesgases erfolgt.

Weiterhin kann vorgesehen sein, daß unterhalb der Austrittsöffnung eines Injektorrohres und damit ggf. auch unterhalb der Austrittsöffnung eines Gasleitrohres eine Umlenkvorrichtung vorge-sehen ist, die kegelförmig ausgebildet ist, wobei die Kegelmantelfläche vorzugsweise konkav gestaltet ist. Durch diese Anordnung wird erreicht, daß das Reinigungsgas wirksam auf die Innenseite des flexiblen Filtermediums geleitet wird und dies mit großem Druck, so daß damit ein gutes Abspülen der an der Außenseite des Filtermediums angelagerten Feststoffpartikel erreichbar ist.

Ein Ausführungsbeispiel der Erfindung wird nachfolgend anhand der Zeichnung erläutert. Die Zeichnung zeigt hierbei in
- Fig. 1: schematisch die erfindungsgemäße Filteranordnung gemäß Linie 1 - 1 in Fig. 2, in
- Fig. 2: einen Schnitt durch die Anordnung gemäß der Linie 2 - 2 in Fig 1 in der Stellung, in der das Filtermedium von außen mit Prozeßluft beaufschlagt wird und daher an der Außenseite des Filtermediums Feststoffpartkel abgelagert werden und in
- Fig. 3: eine Anordnung entsprechend der Schnittdarstellung in Fig. 1, wobei aber nunmehr Reinigungsgas in das Innere des Filtermediums geleitet ist und dadurch ein Aufblähen des Filtermediums erfolgt ist und damit ein Abwerfen der an der Außenseite angesammelten Feststoffpartikel.

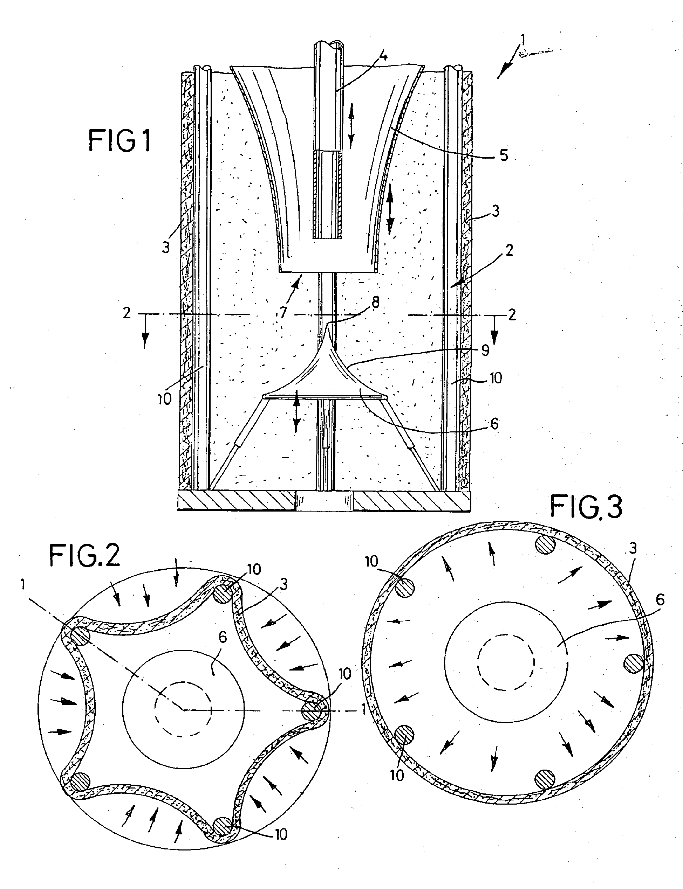

In Fig. 1 ist mit 1 eine Filteranordnung bezeichnet, die im wesentlichen - so wie dies besonders deutlich aus den Fig. 2 und 3 hervorgeht - aus einer Rahmenanordnung besteht, bei welcher an der Außenseite von Stützstäben 10 ein flexibles Filtermedium angebracht ist. Dieses flexible Filtermedium 3 wird im Betrieb der Gesamtanordnung, die aus Übersichtlichkeitsgründen nicht dargestellt ist, mit Prozeßluft beaufschlagt und dadurch in die in Fig. 2 dargestellte Form verformt, wobei sich an der Außenseite des Filtermediums Feststoffpartikel ablagern.

In das Innere dieses durch die Stützstäbe 10 gebildeten starren Stützrahmens 2 führt ein Injektorgasrohr 4, das - wie durch den Pfeil angedeutet - höhenverstellbar ausgebildet ist.

Das Injektorgasrohr 4 wird von einem Gasleitrohr 5 umgeben, das - wie aus der Zeichnung erkennbar - vorzugsweise venturidüsenartig gestaltet ist. Auch dieses Gasleitrohr 5 ist höhenverstellbar ausgebildet.

Unterhalb der Austrittsöffnung des Injektorrohres 4 ist eine Umlenkvorrichtung 6 vorgesehen, die ebenfalls - wie der Pfeil andeutet - höhenverstellbar ausgebildet ist, wobei die eigentliche Kegelmantelfläche 9 konkav gestaltet ist, so daß dadurch ein Umlenken um 90° der auftreffenden Spülluft erreicht wird.

Durch das Zusammenwirken der verstellbaren Vorrichtungen, nämlich dem Injektorrohr 4, dem Gasleitrohr 5 und der Umlenkvorrichtung 6, ist es möglich, die gesamte Fläche des Filtermediums 3 über die Höhe gesehen mit Reinigungsgas zu bestreichen, so daß dadurch eine wirksame Reinigung des eigentlichen Filtermediums ereichbar ist.

## Patentansprüche

1. Flexible Filteranordnung mit einem flexiblen Filtermedium (3), das von einem starren, aber gasdurchlässigen Rahmen (2) getragen und durch Gasimpulse bewegt und dadurch gereinigt werden kann, wobei ein in das Innere der Filteranordnung (1) reichender Injektor (4) für Spülgas und ein den Injektor (4) im Abstand umgebendes, sich in Fließrichtung des Gasstromes konisch verengendes Gasleitrohr (5) zum Ansaugen von Prozeßluft vorgesehen sind,
**gekennzeichnet durch**
eine zentrisch unter der Austrittsöffnung (7) des Injektors (4) oberhalb des Bodens der Filteranordnung (1) angeordnete Umlenkvorrichtung (6), die ein Umlenken des austretenden Spülgases bewirkt,
wobei der Injektor (4), das Gasleitrohr (5) und die Umlenkvorrichtung (6) jeweils innerhalb der Filteranordnung (1) höhenverstellbar sind.

2. Filteranordnung nach Anspruch 1, **dadurch gekennzeichnet, daß** die Umlenkvorrichtung (6) kegelförmig ausgebildet ist und die Kegelspitze (8) zur Austrittsöffnung (7) hin gerichtet ist.

3. Filteranordnung nach Anspruch 2, **dadurch gekennzeichnet, daß** die Kegelmantelfläche (9) konkav gewölbt ist.

4. Filteranordnung nach Anspruch 1, **dadurch gekennzeichnet, daß** das Gasleitrohr (5) venturirohrartig ausgebildet ist, d. h. sich konisch oder düsenförmig verengt und dann diffusorförmig erweitert.

## Claims

1. Flexible filter arrangement with a flexible filter medium (3) which is supported by a rigid but gas-permeable frame (2) and moved by gas impulses, by means of which it can be cleaned, where an injector (4) for flushing gas extending into the interior of the filter arrangement (1) and a gas duct (5) tapering conically in the flow direction of the gas for sucking up the process air, and enveloping the injector (4) at a distance, are provided,
**characterised by** a diverting device (6) arranged centrally beneath the outlet opening (7) of the injector (4) above the bottom of the filter arrangement (1) which diverts the emerging flushing gas, where the injector (4), the gas duct (5) and the diverting device (6) can be adjusted in height inside the filter arrangement (1).

2. Filter arrangement in accordance with claim 1, **characterised in that** the diverting device (6) is funnel-shaped and the tip (8) of the funnel points towards the outlet (7).

3. Filter arrangement in accordance with claim 2, **characterised in that** the casing surface (9) of the funnel is concave in shape.

4. Filter arrangement in accordance with claim 1, **characterised in that** the gas duct (5) is shaped like a venturi tube, i.e. tapers conically or similar to a nozzle, and then expands to take the shape of a diffuser.

## Revendications

1. Montage filtrant flexible comprenant un média filtrant (3) flexible supporté par un cadre (2) rigide mais perméable au gaz et que des impulsions de gaz permettent de déplacer et de la sorte nettoyer, sachant qu'un injecteur (4) de gaz de rinçage saillant à l'intérieur du montage filtrant (1) et un tube de guidage du gaz (5) entourant l'injecteur (4) à une certaine distance et allant en se rétrécissant de façon conique dans le sens d'écoulement du flux de gaz sont prévus pour aspirer de l'air processuel,
**caractérisé par** un dispositif de renvoi (6), agencé centré sous l'orifice de sortie (7) de l'injecteur (4) au-dessus du fond du montage filtrant (1) et qui provoque un renvoi du gaz de rinçage sortant, sachant que l'injecteur (4), le tube de guidage du gaz (5) et le dispositif de renvoi (6) sont chacun réglables en hauteur à l'intérieur du montage filtrant (1).

2. Montage filtrant selon la revendication 1, **caractérisé en ce que** le dispositif de renvoi (6) est configuré conique et que la pointe (8) du cône regarde vers l'orifice de sortie (7).

3. Montage filtrant selon la revendication 2, **caractérisé en ce que** la surface enveloppante (9) du cône est de forme concave.

4. Montage filtrant selon la revendication 1, **caractérisé en ce que** le tube de guidage du gaz (5) est configuré en tube de Venturi, c'est-à-dire qu'il va en se rétrécissant selon une géométrie conique ou en forme de buse, puis qu'il s'évase en forme de diffuseur.
